# EUROPEAN PATENT SPECIFICATION

(11) **EP 3 325 242 B1**
(45) Date of publication and mention of the grant of the patent: **26.02.2020**
(21) Application number: 16738393.4
(22) Date of filing: 07.07.2016
(51) Int. Cl.: B29B 9/06, B29B 9/16, B29C 48/00, B29C 48/05, B29C 48/285, B29C 48/91, B29K 23/00, B29C 48/30, B29C 48/345

(54) **METHOD FOR PREPARING OF POLYPROPYLENE PELLETS**
VERFAHREN FÜR DIE AUFBEREITUNG VON POLYPROPYLENGRANULATEN
MÉTHODE POUR LA PRÉPARATION DE GRANULÉS DE POLYPROPYLÈNE

(30) Priority: 20.07.2015 EP 15177481
(43) Date of publication of application: 30.05.2018
(73) Proprietor: SABIC Global Technologies B.V., 4612 PX Bergen op Zoom (NL)
(72) Inventor: GREIN, Christelle, Marie, Hélène, 6160 GA Geleen (NL); BERCX, Rick, Robert, Emilie, 6160 GA Geleen (NL)
(74) Representative: Ishiguro, Masaoki
(86) International application number: PCT/EP2016/066195
(87) International publication number: WO 2017/012891

(56) References cited:
- EP-A1- 1 671 773
- EP-A1- 3 015 503
- EP-A1- 3 126 408
- EP-A1- 3 307 820
- EP-A2- 0 367 396
- WO-A1-03/000753
- WO-A1-2015/075054
- CN-A- 102 092 108
- DE-A1- 19 729 302

## Description

The present invention relates to a method of preparing polypropylene pellets.

Polypropylene is the material of choice for many applications, in particular for automotive interior applications. One of the requirements for polypropylene in such applications is that the polypropylene, or a composition or compound based on said polypropylene has a relatively low emission of low molecular weight materials. In other words, such polypropylene may contain only a very low amount of low molecular weight materials, because such low molecular weight materials can cause an unpleasant odor, a sticky feeling of the surface or may condense against windscreens thereby causing a reduced visibility.

One of the requirements related to such emission is laid down in the VDA 278 standard. The emission as determined in that standard is referred to as the FOG value. For example car manufacturers may require that the FOG value is typically at most 500 µg/g, more in particular at most 400 µg/g. With requirements becoming more strict in the future FOG values of at most 250 µg/g are desirable.

Currently a method for reducing FOG involves maintaining polypropylene pellets or powders at a certain elevated temperature for a certain amount of time. For example polypropylene pellets or powder may be continuously fed to the top of a silo where the polypropylene is preferably contacted in counter-flow with a stream of hot gas, which may be for example nitrogen or dried air. At the bottom of the silo polypropylene having a reduced FOG value is then continuously withdrawn. This process is often referred to as venting or purging. It is noted that this venting or purging should not be confused with the removal of unreacted monomer as is usually carried out directly after polymerisation on the powder.

Venting (or purging) processes, albeit not directed specifically at polypropylene are disclosed for example in GB 1272778, WO 02/088194, WO2004/039848 and US 6,218,504. Other methods to remove low molecular weight materials also exist, among which are steam stripping or chemical treatment.

In view of the ever more strict requirements with respect to FOG the purging process requires more extreme conditions in terms of temperature and residence time.

EP1671773 A1 relates to a method for reducing volatiles in polymer pellets that comprises the steps of:
a) retrieving the pellets from the extruder and pushing them through a cooling pipe (3) with a stream of cooling water and with a residence time sufficient to reach the desired temperature;
b) separating the pellets from the water in a dryer , returning the water to the cooling system via a cooling device and pushing the cooled pellets through a pipe into the heating silo;
c) keeping the pellets for a period of time of from 5 to 50 hours in the heating silo under a stream of hot gas entering near the lower end of the heating silo and escaping through the upper open surface;
d) continuously retrieving pellets through the bottom part of the heating silo via a valve that allows control of the exiting flow of material in order to keep the heating silo constantly full;
e) feeding the pellets to the cooling silo;
f) keeping the cooling silo under a steam of gas at room temperature to bring the pellets'temperature down to the desired level of from 60 to 70°C;
g) sending the cooled pellest to the homogenization silos.

EP2154190A1 relates to polypropylene compositions having a low content of volatile components, which is achieved by the use of specific substances, in particular hindered amine light stabilisers.

The present inventors found however that if relatively small amounts, i.e. 0.1 - 2% of the total capacity of the venting equipment, of cold polypropylene pellets are fed in a semi-continuous manner to a purge vessel operating at high temperature and containing already polypropylene pellets of high temperature, the relatively cold polypropylene pellets fed to the purge vessel will relatively quickly start to re-crystallise thereby releasing heat of crystallisation. In view of the already high temperature in the purge vessel such heat cannot be removed efficiently causing the pellets to become sticky. The sticky pellets can form agglomerates that in turn can result in blocking of the purge vessel or the piping system for removal of the polypropylene pellets. This problem is referred to as "heat runaway". A possible solution to overcome this problem would be to add in a semi-continuous manner large quantities of cold polypropylene pellets; However such a process is disadvantageous as it also means that in a semi-continuous manner large amounts of vented polypropylene pellets need to be extracted at the bottom section of the venting equipment. Hence, such way of venting is less preferred as it will result in a less stable process.

It is therefore an object of the present invention to provide an economically feasible, stable and safe process for the treatment of polypropylene pellets that results in polypropylene having low FOG values as determined in accordance with VDA 278.

The present inventors have found that if the venting is performed under certain conditions, good quality material can be obtained in an economically feasible and safe manner. The inventive process can moreover be carried out in a stable manner without significant fluctuations in throughput, quality or process settings.

Accordingly the present invention relates to a method according to claim 1 for continuously preparing polypropylene pellets having low FOG emission properties as determined in accordance with VDA 278, the method comprising the steps of
a) preheating polypropylene pellets, preferably to a temperature of from 60 to 135°C in the preheating step a), for example of from 80 to 125°C, for example to a temperature of from 60 to 100 °C.
b) feeding the preheated polypropylene pellets of step a) to purge vessel via a feeding side and maintaining the pellets in said purge vessel while directing a flow of at least 10 Nm³ purge gas per hour per m³ of polypropylene pellets (Nm³/m³_{PP}.hour) through said polypropylene pellets,
c) removing polypropylene pellets from an extraction side from said purge vessel, wherein the residence time of polypropylene pellets in said purge vessel is at least 24 hours and the polypropylene pellets are maintained at a temperature of from 100 to 140 °C,
wherein in the preheating step a) the pellets are preheated to a temperature of not more than 10°C, for example of not more than 5°C higher than the temperature at which the pellets are maintained in the purge vessel;
wherein the polypropylene pellets have a temperature of < 40°C before the pellets are subjected to the preheating step a).

For the avoidance of doubt it is to be understood that the preheated pellets are fed in the purge vessel on top of previously fed pellets.

Preferably the pellets move through the purge vessel under the influence of gravity, i.e. from a top side to a bottom side, while at the same time the flow of purge gas is forced to flow counter-currently to the flow of the pellets. The present invention is however not limited to this most practical embodiment and different alternatives may be envisaged as long as the flow of the pellets and the flow of the purge gas is countercurrent. In this embodiment the feeding side corresponds to the top side of the purge vessel and the extraction side to the bottom side of the purge vessel.

During the method of the invention the polypropylene pellets move through the purge vessel in a continuous or semi-continuous manner wherein at a point in time the total amount of pellets (either by volume or by weight) does not go below 90% or above 110% of the target amount of pellets in the purge vessel. The flow of the pellets through the purge vessel is in the form of a plug flow meaning that there is no or at least no substantial axial mixing of the pellets in the purge vessel.

In this respect the term "continuous" means that the volume of pellets is moving continuously, i.e. not intermittently. This way of performing the method can be done by continuously extracting polypropylene pellets from the purge vessel. It is preferred that the continuous extraction is accompanied by a continuous feeding of pre-heated polypropylene pellets. This is however not essential and the feeding of pre-heated polypropylene pellets may be carried out batch-wise. The total amount of pellets (either by volume or by weight) does not go below 90% or above 110% of the target amount of pellets.

The term "semi-continuous" means that, contrary to "continuous" the volume of pellets is moving intermittently through the purge vessel. This way of performing the method can be done by extracting polypropylene pellets from the purge vessel in a batch-wise manner. It is preferred that the batch-wise extraction is accompanied by a continuous feeding of pre-heated polypropylene pellets. This is however not essential and the feeding of pre-heated polypropylene pellets may also be carried batch-wise. The total amount of pellets (either by volume or by weight) does not go below 90% or above 110% of the target amount of pellets.

The term "maintained at a temperature" is to be understood that the pellets are maintained in the purge vessel at the mentioned temperature, i.e. from 100 to 140 °C. Hence, in the purge vessel the temperature of the pellets is in said range. The skilled person will understand that throughout the purge vessel the temperature may not be constant and may vary within said range. In addition the skilled person will understand that pellets which have been freshly fed from the pre-heating step will not immediately have the temperature in said range but a certain time is needed to accomplish the desired increase in temperature. For the purpose of this invention this is the relatively short period of time wherein the freshly added pre-heated pellets are heated to be within the range 100 to 140 °C is considered negligible in view of the requirement that the residence time of the pellets is at least 24 hours.

The preheating step in the method of the present invention comprises feeding polypropylene pellets to a preheating vessel. This may be done in a continuous manner, semi-continuous manner or, if two or more pre-heating vessels are used in a batch-wise alternating manner.

The residence time in the purge vessel is preferably at least 40 hours, more preferably at least 50 or 60 hours. The longer the residence time the less extreme conditions in terms of temperature need to be applied in order to remove sufficient volatile material in order to meet the desired FOG emission value.

In the purge vessel the polypropylene pellets are maintained in the purge vessel at a temperature of from 105 - 135°C, more preferably from 110 - 130°C.In a preferred embodiment the temperature in the purge vessel is in the range of from 115 - 125°C.

In an embodiment the pellets are maintained in the purge vessel for a time of from 40 - 80 hours at a temperature in the range of from 115 - 125°C.

The pressure in the pre-heating and the purge vessel may be the same or different and is preferably approximately atmospheric. It is preferred to have a slight under pressure both for safety reasons as well as for reason of improved removal of volatile materials. At the same time it is generally impractical to have too much under pressure as that will put more stringent requirements on the equipment and further make the equipment more complex, in particular in the area where polypropylene pellets need to be extracted from the purge vessel. Accordingly in the method of the invention the pressure in the preheating vessel and the purge vessel is in the range of from 900 - 1100 mbar.

The purge gas flow is at least 10 Nm³/hr per m³ of polypropylene pellets. The upper limit of the purge gas flow is limited by the type and size of pellets and the bulk density which dictate the point at which the plug flow of pellets through the purge vessel get disrupted. As soon as the purge gas flow becomes too high the pellets, or a substantial part thereof may become fluidised, i.e. may form a so called fluidised bed, which is undesirable. Practical upper limits may be 60 Nm³/hr or 50 Nm³/hr.

The type of gas that is used as the purge gas is less critical and may be selected from air, dried air (relative humidity < 10%) and nitrogen.

Materials contributing to the so called FOG value according to VDA 278 represent the sum of all organic compounds of low volatility, which have an elution time greater than or equal to n-tetradecane and up to n-dotriocontane, representing organic compounds in the boiling point range of n-alkanes C₁₄ to C₃₂.

In accordance with the invention the polypropylene pellets obtained in step c) have an FOG value of at most 250 µg/g. This upper limit represents the current desirable value in industry. Depending on the conditions at which the polypropylene is maintained in step b) practical lower limits include at least 25 µg/g, at least 50 µg/g or at least 100 µg/g.

To that extent it needs be understood that the polypropylene pellets before being preheated have a FOG value of more than 250 µg/g. Obviously there is no need to reduce the FOG value of materials that already meet the desired specification in terms of FOG value.

Typically polypropylene pellets having an FOG value of up to 750 µg/g can be subject to the method of the present invention and resulting in pellets having an FOG value of less than 250 µg/g. Polypropylene pellets having a higher FOG value may require longer residence times in order to sufficiently remove all volatile components. For example such polypropylene pellets may, depending also on the temperature, require a residence time of at least 50 or 60 hours.

The pre-heating and venting can be carried out in equipment available in the market and in general the present invention is not limited to any specific dimensions. That said, the shape of, in particular, the venting vessel has an influence on the efficiency in the removal of the volatile organic compounds from the polypropylene pellets. Accordingly it is preferred that the purge vessel comprises a substantially cylindrical section of constant inner diameter D and a height L, such that L/D is at least 2, preferably at least 5, more preferably at least 10. A lower section of the purge vessel is generally cylindrically shaped allowing the uniform removal of vented polypropylene pellets. Such shapes are known in the art.

The bulk density of polypropylene pellets is preferably from 450 - 650 kg/m³. The bulk density may be determined in accordance with ISO 60. It is noted that the term pellets in the context of the present invention should not be confused with a powder or powder-like material. Rather the pellets according to the invention are obtained after extrusion of polypropylene powder coming from a polymerisation reactor or a series of polymerisation reactors, wherein during the extrusion usually certain stabilisers are added to the polypropylene powder. The extruder extrudes the (stabilised) polypropylene into one or more strands which consecutively are cut into pellets. Typically the number of pellets per gram is from 20 to 80, preferably from 35 - 65, more preferably from 45 - 55.
Thus, preferably the method of the invention further comprises the steps of polymerising propylene and optionally one or more comonomers so as to form polypropylene powder, feeding said polypropylene powder and optional additives to an extruder, extruding the polypropylene and optional additives through a die so as to form one or more strands and cutting the obtained strand(s) into said polypropylene pellets. It is further preferred that the cut pellets are consecutively fed to the preheating vessel while having a temperature in the range of from 40 to 80 °C. Feeding the pellets to the preheating vessel at higher temperature is advantageous as it reduces the time needed to preheat the pellets. It is also more cost-effective and more environmentally friendly. Thus in an embodiment the pellets, after being formed from polypropylene leaving the reactor(s) is directly fed to the pre-heating vessel without any further steps involving melting, heating or cooling the pellets. As an exception a step of drying the pellets to remove (remains of) cooling water used to cool the strands after the extruder may be included in this embodiment.

In the method of the invention, in the preheating step a) the pellets are preheated to a temperature of not more than 10°C, for example of not more than 5°C higher than the temperature at which the pellets are maintained in the purge vessel; for example in the preheating step a), the pellets are preheated to a temperature which is substantially the same as the temperature at which the pellets are maintained in the purge vessel.

The type of polypropylene is not critical and can be a propylene homopolymer, a propylene random copolymer or a heterophasic propylene copolymer. The present method is not limited to single kind of polypropylenes, and blends of at least two polypropylenes should also be considered to fall within the scope of the invention. That said, in view of the final application of the polypropylene, the polypropylene is generally of the kind that can be shaped using injection moulding, blow moulding or compression moulding. Consequently the melt flow range will typically be in the range of from 10-250 g/10min, such as from 10 - 100 g/10min or 20 - 80 g/10min or 30 - 60 g/10min as determined in accordance with ISO 1133 (2.16kg, 230°C).

Therefore, the method of the invention may also comprise the further step of
a) shaping the polypropylene pellets resulting from step c) into an article.

Also disclosed are polypropylene pellets obtained by the method of the invention. Preferably, the polypropylene obtained by the method of the invention has an FOG value of at most 250 µg/g as measured using VDA278.

The use of the terms "a" and "an" and "the" and similar referents in the context of describing the invention (especially in the context of the claims) are to be construed to cover both the singular and the plural, unless otherwise indicated herein or clearly contradicted by context. The terms "comprising", "having", "including" and "containing" are to be construed as open-ended terms (i.e., meaning "including, but not limited to") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention. For the purpose of the description and of the appended claims, except where otherwise indicated, all numbers expressing amounts, quantities, percentages, and so forth, are to be understood as being modified in all instances by the term "about". Also, all ranges include any combination of the maximum and minimum points disclosed and include and intermediate ranges therein, which may or may not be specifically enumerated herein.

The invention will now be further illustrated by the following examples.

### Test method

FOG values were determined in accordance with VDA 278 standard, version October 2011. The measurement of FOG is well known to the skilled person and essentially consists in placing a sample in a desorption tube which is connected on one side with a carrier gas inlet and on the other side to GC-MS analytical equipment.

FOG according to VDA 278 is the sum of all organic compounds of low volatility, which have an elution time greater than or equal to n-tetradecane. FOG is calculated as tetradecane equivalent (TE). FOG according to VDA 278 represents organic compounds in the boiling point range of n-alkanes C₁₄ to C₃₂. VDA standards are issued by "Verband der Automobilindustrie". The VDA standards used herein are available from Dokumentation Kraftfahrwesen (DKF); Ulrichstrasse 14, D-74321 Bietigheim-issingen, Germany or can be downloaded from their website (www.dkf-ev.de).

### Experiments

Four venting experiments were carried out on a pilot scale venting silo comprising a conical outlet section and a substantially cylindrical purging section having an internal diameter of about 0.85m and having a maximum capacity of about 1.7 m³ The experiments were conducted using a filling level in the purge vessel of about 720 kg of pellets having a bulk density of about 534 kg/m³. The experiments were carried out by continuous feeding and withdrawing of polypropylene pellets with a throughput of about 10 kg/hr. Accordingly the residence time was 72 hour in each experiment. The target temperature of the pellets in the silo and the flow rates of the purge gas was as shown in Table 1 below. The normal cubic metre per hour (Nm³/hr) means the cubic meter of purge gas at room temperature (23 °C) and a pressure of 1 atmosphere (i.e. ambient pressure).

The polymer pellets used in the Experiments were SABIC PP612 MK10, a heterophasic polypropylene having a melt flow rate of about 33 g/10min (ISO 1133, 2.16 kg, 230°C). All pellets were at room temperature (20°C). In Exp_1, Exp_2 and Exp_3, the pellets were preheating. In Exp_4, the pellets were not preheated before they were purged.

The FOG of this material when coming directly from the plant (i.e. without being vented) is about 700 µg/g.

An inlet for purge gas was located at the lower side of the cylindrical outlet section so that the purge gas moves countercurrent with the flow of pellets through the silo. The purge gas was dried air.

**Table 1**

| | Target temperature [°C] (of the purge vessel) | Flow rate | | Preheat (to target temperature of the purge vessel) | FOG acc. to VDA 278 [µg/g] |
|---|---|---|---|---|---|
| | | [Nm³/hr] | [Nm³/hr.m³ₚₚ] | | |
| Exp_1 | 105 | 40 | 31 | Yes | 265 |
| Exp_2 | 125 | 40 | 31 | Yes | 200 |
| Exp_3 | 125 | 15 | 12 | Yes | 310 |
| Exp_4 | 125 | 15 | 12 | No | 450 |

| | | | | | |
|---|---|---|---|---|---|
| (the target temperature was the temperature measured with a sensor positioned in the outlet section of the purge vessel) | | | | | |

The experimental results show that venting or purging can reduce the FOG to acceptable levels. What is further noticeable is that the flow rate of the purge gas is a relevant parameter for controlling the FOG. Finally it is clear from the results that pre-heating the pellets before they enter into the purge vessel has a significant impact on the FOG value. Without willing to be bound to it the present inventors believe that cold pellets may act as a cold trap onto which high(er) molecular weight oligomers released from pellets below the cold pellets (i.e. the hot pellets) condenses. By preheating the pellets this condensation is prevented or at least significantly reduced. Apart from that the pre-heating reduces the risk of forming agglomerates, as a result of the release of (re)crystallisation heat, to a minimum.

## Claims

1. Method for continuously preparing polypropylene pellets having low FOG emission properties as determined in accordance with VDA 278, the method comprising the steps of
a) preheating polypropylene pellets
b) feeding the preheated polypropylene pellets of step a) to a purge vessel via a feeding side and maintaining the pellets in said purge vessel while directing a flow of at least 10 Nm³ purge gas per hour per m³ of polypropylene pellets (Nm³/ m³_{PP}.hour) through said polypropylene pellets,
c) removing polypropylene pellets from an extraction side from said purge vessel,
wherein the residence time of polypropylene pellets in said purge vessel is at least 24 hours and the polypropylene pellets are maintained at a temperature of from 100 to 140 °C,
wherein in the preheating step a) the pellets are preheated to a temperature of not more than 10°C, for example of not more than 5°C higher than the temperature at which the pellets are maintained in the purge vessel;
wherein the polypropylene pellets have a temperature of < 40°C before the pellets are subjected to the preheating step a).

2. The method of claim 1 wherein the preheating comprises feeding polypropylene pellets to a preheating vessel.

3. The method of claims 1 or 2 wherein the residence time of polypropylene pellets in the purge vessel is at least 40 hours.

4. The method of any one of claims 1 - 3 wherein the polypropylene pellets are maintained in the purge vessel at a temperature of from 105 - 135°C, more preferably from 110 - 130°C.

5. The method of any one of claims 2 - 4 wherein the pressure in the preheating vessel and the purge vessel is in the range of from 900 - 1100 mbar.

6. The method of any one of claims 1 - 5 wherein the polypropylene pellets obtained in step c) have an FOG value of at most 250 µg/g as measured using VDA278 and/or wherein the polypropylene pellets before being preheated have a FOG value of more than 250 µg/g as measured using VDA278.

7. The method of any one of claims 1 - 6 wherein the purge vessel comprises a substantially cylindrical section of constant inner diameter D and a height L, such that L/D is at least 2, preferably at least 5, more preferably at least 10.

8. The method of any one of claims 1-7wherein the polypropylene pellets have a bulk density of from 450 - 650 kg/m³.

9. The method of any one of claims 1 - 8 wherein the polypropylene is a propylene homopolymer, a propylene random copolymer or a heterophasic propylene copolymer.

10. The method of any one of claims 1 - 9 further comprising the steps of polymerising propylene and optionally one or more comonomers so as to form polypropylene powder, feeding said polypropylene powder and optional additives to an extruder, extruding the polypropylene and optional additives through a die so as to form one or more strands and cutting the obtained strand(s) into said polypropylene pellets.

11. The method of any one of claims 1-10, wherein in the preheating step a), the pellets are preheated to a temperature which is substantially the same as the temperature at which the pellets are maintained in the purge vessel.

12. The method of any one of claims 1-11, further comprising the step of d) shaping the polypropylene pellets resulting from step c) into an article.

13. The method of any one of claims 1-12, wherein the pellets are preheated to a temperature of from 60 to 135°C in the preheating step a), for example to a temperature of from 80 to 125°C, for example to a temperature of from 60 to 100 °C.

## Patentansprüche

1. Verfahren zum kontinuierlichen Herstellen von Polypropylen-Pellets mit geringen FOG-Emissionseigenschaften, wie bestimmt nach VDA 278, wobei das Verfahren die Schritte umfasst:
a) Vorwärmen von Polypropylen-Pellets
b) Speisen der vorgewärmten Polypropylen-Pellets aus Schritt a) über eine Speiseseite zu einem Spülgefäß und Halten der Pellets in dem Spülgefäß, während ein Strom von mindestens 10 Nm³ Spülgas pro Stunde pro m³ Polypropylen-Pellets (Nm³/m³_{PP} Stunde) durch die Polypropylen-Pellets geleitet wird,
c) Entfernen der Polypropylen-Pellets von einer Entnahmeseite aus dem Spülgefäß,
wobei die Verweildauer von Polypropylen-Pellets in dem Spülgefäß mindestens 24 Stunden beträgt und die Polypropylen-Pellets auf einer Temperatur von 100 bis 140 °C gehalten werden,
wobei in dem Vorwärmschritt a) die Pellets auf eine Temperatur von nicht mehr als 10 °C, beispielsweise von nicht mehr als 5 °C höher als die Temperatur, bei der die Pellets in dem Spülgefäß gehalten werden, vorgewärmt werden;
wobei die Polypropylen-Pellets eine Temperatur von < 40 °C aufweisen, bevor die Pellets dem Vorwärmschritt a) unterworfen werden.

2. Verfahren nach Anspruch 1, wobei das Vorwärmen das Speisen von Polypropylen-Pellets zu einem Vorwärmgefäß umfasst.

3. Verfahren nach Anspruch 1 oder 2, wobei die Verweildauer von Polypropylen-Pellets in dem Spülgefäß mindestens 40 Stunden beträgt.

4. Verfahren nach einem der Ansprüche 1 bis 3, wobei die Polypropylen-Pellets in dem Spülgefäß auf einer Temperatur von 105 bis 135 °C, bevorzugter von 110 bis 130 °C, gehalten werden.

5. Verfahren nach einem der Ansprüche 2 bis 4, wobei der Druck in dem Vorwärmgefäß und dem Spülgefäß in dem Bereich von 900 bis 1.100 mbar ist.

6. Verfahren nach einem der Ansprüche 1 bis 5, wobei die Polypropylen-Pellets, die in Schritt c) erhalten werden, einen FOG-Wert von höchstens 250 µg/g, wie gemessen unter Nutzung von VDA 278, aufweisen und/oder wobei die Polypropylen-Pellets, bevor sie erwärmt werden, einen FOG-Wert von mehr als 250 µg/g, wie gemessen unter Nutzung von VDA 278, aufweisen.

7. Verfahren nach einem der Ansprüche 1 bis 6, wobei das Spülgefäß einen im Wesentlichen zylindrischen Abschnitt mit konstantem Innendurchmesser D und eine Höhe L aufweist, derart, dass L/D mindestens 2, bevorzugt mindestens 5, bevorzugter mindestens 10, beträgt.

8. Verfahren nach einem der Ansprüche 1 bis 7, wobei die Polypropylen-Pellets eine Schüttdichte von 450 bis 650 kg/m³ aufweisen.

9. Verfahren nach einem der Ansprüche 1 bis 8, wobei das Polypropylen ein Propylenhomopolymer, ein statistisches Propylencopolymer oder ein heterophasiges Propylencopolymer ist.

10. Verfahren nach einem der Ansprüche 1 bis 9, ferner umfassend die Schritte des Polymerisierens von Propylen und optional einem oder mehreren Comonomeren, um Polypropylenpulver zu bilden, des Speisens des Polypropylenpulvers und optionale Zusatzstoffe zu einem Extruder, des Extrudierens des Polypropylens und der optionale Zusatzstoffe durch eine Düse, um einen oder mehrere Stränge zu bilden, und des Schneidens des (der) erhaltenen Stranges (Stränge) in die Polypropylen-Pellets.

11. Verfahren nach einem der Ansprüche 1 bis 10, wobei in dem Vorwärmschritt a) die Pellets auf eine Temperatur vorgewärmt werden, die im Wesentlichen die gleiche wie die Temperatur ist, auf welcher die Pellets in dem Spülgefäß gehalten werden.

12. Verfahren nach einem der Ansprüche 1 bis 11, ferner umfassend den Schritt:
d) Gestalten der Polypropylen-Pellets, die aus Schritt c) resultieren, zu einem Gegenstand.

13. Verfahren nach einem der Ansprüche 1 bis 12, wobei die Pellets in dem Vorwärmschritt a) auf eine Temperatur von 60 bis 135 °C, beispielsweise auf eine Temperatur von 80 bis 125 °C, beispielsweise auf eine Temperatur von 60 bis 100 °C, vorgewärmt werden.

## Revendications

1. Procédé de préparation en continu de pastilles de polypropylène ayant des propriétés d'émission de FOG faibles telles que déterminées selon la norme VDA 278, le procédé comprenant les étapes consistant à :
a) préchauffer les pastilles de polypropylène
b) alimenter les pastilles de polypropylène préchauffées de l'étape a) à un récipient de purge via un côté d'alimentation et maintenir les pastilles dans ledit récipient de purge tout en dirigeant un écoulement d'au moins 10 Nm³ de gaz de purge par heure par m³ de pastilles de polypropylène (Nm³/m³_{PP}.heure) à travers lesdites pastilles de polypropylène,
c) enlever les pastilles de polypropylène d'un côté d'extraction dudit récipient de purge,
dans lequel le temps de résidence des pastilles de polypropylène dans ledit récipient de purge est d'au moins 24 heures et les pastilles de polypropylène sont maintenues à une température de 100 à 140 °C,
dans lequel l'étape de préchauffage a) les pastilles sont préchauffées à une température de pas plus de 10 °C, par exemple de pas plus de 5 °C de plus que la température à laquelle les pastilles sont maintenues dans le récipient de purge ;
dans lequel les pastilles de polypropylène ont une température de < 40 °C avant que les pastilles soient soumises à l'étape de préchauffage a).

2. Procédé selon la revendication 1 dans laquelle le préchauffage comprend l'alimentation des pastilles de polypropylène à un récipient de préchauffage.

3. Procédé selon les revendications 1 ou 2 dans lequel le temps de résidence des pastilles de polypropylène dans le récipient de purge est d'au moins 40 heures.

4. Procédé selon l'une quelconque des revendications 1 à 3 dans lequel les pastilles de polypropylène sont maintenues dans le récipient de purge à une température de 105 à 135 °C, davantage de préférence de 110 à 130 °C.

5. Procédé selon l'une quelconque des revendications 2 à 4 dans lequel la pression dans le récipient de préchauffage et le récipient de purge se situe dans la plage de 900 à 1100 mbars.

6. Procédé selon l'une quelconque des revendications 1 à 5 dans lequel les pastilles de polypropylène obtenues dans l'étape c) ont une valeur de FOG d'au plus 250 µg/g telle que mesurée en utilisant la norme VDA278 et/ou dans lequel les pastilles de polypropylène avant d'être préchauffées ont une valeur de FOG de plus de 250 µg/g telle que mesurée en utilisant la norme VDA278.

7. Procédé selon l'une quelconque des revendications 1 à 6 dans lequel le récipient de purge comprend une section essentiellement cylindrique de diamètre interne constant D et une hauteur L, de telle manière que L/D est d'au moins 2, de préférence d'au moins 5, davantage de préférence d'au moins 10.

8. Procédé selon l'une quelconque des revendications 1 à 7 dans lequel les pastilles de polypropylène ont une masse volumique de 450 à 650 kg/m³.

9. Procédé selon l'une quelconque des revendications 1 à 8 dans lequel le polypropylène est un homopolymère de propylène, un copolymère aléatoire de propylène ou un copolymère de propylène hétérophasique.

10. Procédé selon l'une quelconque des revendications 1 à 9 comprenant en outre les étapes de polymérisation de propylène et d'éventuellement un ou plusieurs comonomères pour former une poudre de polypropylène, l'alimentation de ladite poudre de polypropylène et d'additifs optionnels à un extrudeur, l'extrusion du polypropylène et des additifs optionnels à travers une trémie pour former un ou plusieurs brins et le découpage du(des) brin(s) obtenu(s) en lesdites pastilles de polypropylène.

11. Procédé selon l'une quelconque de revendications 1 à 10, dans lequel dans l'étape de préchauffage a), les pastilles sont préchauffées à une température qui est essentiellement la même que la température à laquelle les pastilles sont maintenues dans le récipient de purge.

12. Procédé selon l'une quelconque des revendications 1 à 11, comprenant en outre l'étape consistant à
d) former les pastilles de polypropylène résultant de l'étape c) en un article.

13. Procédé selon l'une quelconque des revendications 1 à 12, dans lequel les pastilles sont préchauffées à une température de 60 à 135 °C dans l'étape de préchauffage a), par exemple à une température de 80 à 125 °C, par exemple à une température de 60 à 100 °C.
